# EUROPÄISCHE PATENTSCHRIFT

(11) **EP 2 893 319 B1**
(45) Veröffentlichungstag und Bekanntmachung des Hinweises auf die Patenterteilung: **01.05.2019**
(21) Anmeldenummer: 13753895.5
(22) Anmeldetag: 03.09.2013
(51) Int. Cl.: G01N 21/03, G01N 21/11, G01N 21/64, B01L 3/00, G02B 21/00, G02B 21/26, G02B 21/33

(54) **ANORDNUNG UND VERFAHREN ZUR AUFNAHME, ZUR POSITIONIERUNG UND ZUR UNTERSUCHUNG EINER MIKROSKOPISCHEN PROBE**
ARRANGEMENT AND METHOD FOR ACCOMMODATING, POSITIONING AND EXAMINING A MICROSCOPIC SPECIMEN
SYSTÈME ET PROCÉDÉ DE RÉCEPTION, POSITIONNEMENT ET ANALYSE D'UN ÉCHANTILLON MICROSCOPIQUE

(30) Priorität: 03.09.2012 DE 102012108158
(43) Veröffentlichungstag der Anmeldung: 15.07.2015
(73) Patentinhaber: Johann Wolfgang Goethe-Universität, 60323 Frankfurt am Main (DE)
(72) Erfinder: PAMPALONI, Francesco, 65929 Frankfurt am Main (DE); STELZER, Ernst H. K., 74909 Meckesheim (DE); MATTHEYER, Christian, 60431 Frankfurt am Main (DE)
(74) Vertreter: Lucke, Andreas
(86) Internationale Anmeldenummer: PCT/EP2013/068186
(87) Internationale Veröffentlichungsnummer: WO 2014/033320

(56) Entgegenhaltungen:
- DE-A1- 2 156 688
- DE-A1- 19 616 571
- DE-U1- 8 902 144
- US-A1- 2010 067 104
- US-B1- 6 473 171
- PAMPALONI FRANCESCO ET AL: "The third dimension bridges the gap between cell culture and live tissue", NATURE REVIEWS MOLECULAR CELL BIOLOGY, NATURE PUBLISHING, GB, Bd. 8, Nr. 10, 1. Oktober 2007 (2007-10-01), Seiten 839-845, XP009133896, ISSN: 1471-0072

## Beschreibung

### GEBIET DER ERFINDUNG

Die vorliegende Erfindung liegt auf dem Gebiet der Probenvorbereitung und Probenpositionierung für die Mikroskopie. Insbesondere betrifft sie eine eine Anordnung, welche eine Kapillarzelle enthält, sowie ein Verfahren zur Aufnahme, zur Positionierung und zur Untersuchung einer fluoreszierenden, aufgehellten mikroskopischen Probe mithilfe eines Fluoreszenzmikroskopes (Epi-, Konfokal-, und Lichtscheiben-Mikroskopes).

### VERWANDTER STAND DER TECHNIK

Zur Untersuchung von biologischen oder medizinischen Proben wird im Stand der Technik die Fluoreszenzmikroskopie verwendet. In der medizinischen Forschung wird die Fluoreszenzmikroskopie beispielsweise eingesetzt, um die Wirkung (z. B. die Toxizität), die eine bestimmte Substanz auf eine Probe hat, zu beobachten.

Als Proben werden unter anderem Zellkulturen, bestimmte Embryos, z. B. die von Fadenwürmern, von Zebrafischen oder von Mäusen, und Biopsien verwendet.

In der Fluoreszenzmikroskopie werden die zu untersuchenden Strukturen typischerweise mit einem Fluoreszenzfarbstoff markiert. Eine andere Möglichkeit besteht darin, Proben zu verwenden, die bereits bestimmte Fluoreszenzfarbstoffe enthalten.

Damit fluoreszenzmikroskopische Probenbilder aufgenommen werden können, muss die Probe mit Licht einer bestimmten Wellenlänge beleuchtet werden, die zu einer Anregung des Fluoreszenzfarbstoffes führt. Infolge der Anregung emittiert der Fluoreszenzfarbstoff Fluoreszenzlicht, dessen Wellenlänge im Allgemeinen von der Wellenlänge des anregenden Beleuchtungslichtes abweicht.

Mithilfe eines Mikroskops kann das Fluoreszenzlicht detektiert und somit die mit dem Fluoreszenzfarbstoff behafteten Probenstrukturen sichtbar gemacht werden. Um nur die Probenstrukturen aus einer bestimmten Probenebene abzubilden und die aus anderen Probenebenen bzw. -schichten auszublenden, kann die Probe lokal in einer Ebene beleuchtet werden, sodass nur Strukturen aus der beleuchteten Probenebene zur Fluoreszenzlichtemission angeregt werden. Als Folge der selektiven Lichtebenenbeleuchtung zeigt die mikroskopische Abbildung des Fluoreszenzlichtes daher nur Probenstrukturen der beleuchteten Ebene. Man spricht von Lichtscheiben-Fluoreszenz-Mikroskopie.

Um eine dreidimensionale Darstellung von fluoreszierenden Probenstrukturen zu erhalten, kann die Lichtscheibe relativ zu einer stationären Probe oder die Probe relativ zu einer stationären Lichtscheibe verschoben werden. Die Fluoreszenzbilder aus unterschiedlichen Probenschichten können dann zu einer dreidimensionalen Darstellung der entsprechenden Probenstruktur zusammengefügt werden.

Um möglichst scharfe Bilder der Probenstruktur zu erhalten, sollte das aus dem Probeninneren emittierte Fluoreszenzlicht innerhalb der Probe möglichst wenig gestreut werden. Eine Möglichkeit besteht in Verwendung von Proben, die von Natur aus durchsichtig sind, wie beispielsweise kleine Fischembryonen. Eine andere Möglichkeit besteht darin, die Probe durch ein spezielles Aufhellungsverfahren (engl. Clearing) transparent werden zu lassen, ohne dass dabei die zu untersuchenden Probenstrukturen zerstört werden.

Für die Aufhellung wird die Probe zunächst dehydriert und anschließend in einem Aufhellungsmedium eingelegt. Das Aufhellungsmedium dringt in die Probe ein und gleicht den Brechungsindex der intrazellulären und der extrazellulären Bestandteile aneinander an. Dies hat zur Folge, dass Licht, das die Probe durchläuft, wesentlich weniger gestreut wird, die Probe also transparent wird. Üblicherweise wird die Probe mit Alkohol dehydriert. Das Aufhellungsmedium, in dem die Probe nach der Dehydration eingelegt wird, weist einen hohen, zur biologischen Probe passenden Brechungsindex auf. Diese Medien sind meist unpolare - und damit wasserlösliche - Lösungsmittel, weshalb die Probe normalerweise erst entwässert wird. Ein typisches Aufhellungsmedium besteht aus einem Teil Benzylalkohol und zu zwei Teilen aus Benzylbenzoat (Abkürzung: BABB).

Nachdem die Fluoreszenzprobe aufgehellt wurde, kann sie mithilfe eines Fluoreszenzmikroskops, beispielsweise eines Lichtscheiben-Fluoreszenz-Mikroskops, untersucht werden. Anstatt eines Lichtscheiben-Fluoreszenz-Mikroskops können auch andere Arten von Fluoreszenzmikroskopen verwendet werden, beispielsweise Epi- oder Konfokal-Fluoreszenzmikroskope. In der Lichtscheibenmikroskopie wird die Probe normalerweise in eine Kammer eingebracht, die mit einem Immersionsmedium gefüllt ist. Das Immersionsmedium hat einen hohen Brechungsindex, der dazu führt, dass die Divergenz des Fluoreszenzlichtes beim Austritt aus der Probe, bzw. beim Austritt aus einem Medium, in dem die Probe eingebettet ist, nicht vergrößert wird. Das Immersionsmedium gestattet eine höhere Auflösung der Probenbilder.

Die Aufnahme bzw. die Positionierung der Probe innerhalb der Kammer ist oft sehr aufwendig. Ein weiteres Problem besteht darin, dass das Immersionsmedium, das sich in der Kammer befindet, mit der Probe in Kontakt treten und die Aufhellung beeinträchtigen kann. In dem Artikel "Ultramicroscopy Reveals Axonal Transport Impairments in Cortical Motor Neurons at Prion Disease", Ermolayev et al, Biophysical Journal, Vol. 96, 3390-3398, April 2009 wird beschrieben, dass eine Probe für eine fluoreszenzmikroskopischen Untersuchung mithilfe eines Acrylamidklebers an einem Glasstab befestigt wurde. Durch Verschieben des der Glasstabes konnte die Probe innerhalb einer Kammer positioniert werden.

Eine andere Möglichkeit zur Probenaufnahme und zur Probenpositionierung für die Untersuchung mit einem Mikroskop wird in der Patenanmeldung US 2010/0067104 A1 beschrieben. Die US 2010/0067104 A1 offenbart einen Probenhalter, der sich in einer Kammer befindet, die mit einer Immersionsflüssigkeit gefüllt werden kann. Die Probe ist in einem Agarosegelzylinder eingebettet, der eine höhere Solidität als das Immersionsmedium hat, das den Agarosegelzylinder umgibt. Der Agarosezylinder ist mit dem Probenbehälter verbunden und steht bei einer Untersuchung zumindest teilweise mit dem Immersionsmedium in Kontakt. Mithilfe eines Verschiebetisches und eines weiteren Antriebes kann der Agarosegelzylinder zusammen mit der Probe relativ zu einem Detektionsobjektiv positioniert werden.

Die bekannten Vorrichtungen und Verfahren zur Aufnahme, zur Positionierung und zur Untersuchung von aufgehellten mikroskopischen Fluoreszenzproben erlauben zwar die Aufnahme von dreidimensionalen Darstellungen, sind jedoch mit einigen Nachteilen behaftet. Beispielsweise kann die Aufhellung der Probe durch das Immersionsmedium beeinträchtigt werden. Weiterhin ist im Stand der Technik die Probenaufnahme recht aufwendig.

Auch ist aus dem Stand der Technik keine Aufnahme bekannt, die für eine Untersuchung von lebenden mikroskopischen Proben geeignet ist.

Aus der DE 89 02 144 U1 und aus der US 6,473,171 B1 sind eine Kapillarküvette bzw. eine Vorrichtung mit einer Glasröhre mit quadratischem Querschnitt bekannt, die jeweils für Durchflussmessungen geeignet und bestimmt sind.

### ZUSAMMENFASSUNG DER ERFINDUNG

Der vorliegenden Erfindung liegt die Aufgabe zugrunde, eine Vorrichtung und ein Verfahren für eine verbesserte Probenaufnahme, -positionierung und -untersuchung zur Verfügung zu stellen, welche die oben genannten Nachteile vermeiden.

Diese Aufgabe wird gelöst durch eine Anordnung nach Anspruch 1 und eine Anordnung nach Anspruch 10 sowie durch ein Verfahren nach Anspruch 11 und nach Anspruch 14. Vorteilhafte Weiterbildungen sind in den abhängigen Ansprüchen angegeben.

Die erfindungsgemäße Anordnung umfasst eine Anordnung nach Anspruch 1.

Die Kapillarzelle der erfindungsgemäßen Anordnung bietet für die Aufnahme und die Untersuchung einer aufgehellten mikroskopischen Fluoreszenzprobe eine Reihe von Vorteilen.

Dadurch, dass das Probenvolumen von dem Kammervolumen getrennt ist, kann die Probe innerhalb des Probenvolumens in einem bestimmten Probenmedium eingebettet sein, das sich von dem Immersionsmedium in dem Kammervolumen unterscheidet. Diese Trennung zwischen Probenvolumen und Kammervolumen ist von großer praktischer Bedeutung. In dem Probenvolumen können sich beispielsweise toxische Substanzen befinden, mit denen die Probe behandelt werden soll. Weiterhin kann sich in dem Probenvolumen eine giftige organische Lösung zur Anpassung des Brechungsindex befinden. Eine Ausbreitung dieser giftigen Substanzen in das vergleichsweise große und offene Kammervolumen ist unerwünscht und wird durch die Trennung verhindert. Auch werden viel kleinere Mengen der entsprechenden Substanz benötigt, um innerhalb des Probenvolumens eine bestimmte Konzentration einzustellen.

Die Trennung verhindert jedoch nicht nur den Austritt des Probenmediums, sondern auch, dass das Immersionsmedium aus dem Kammervolumen mit der Probe in Kontakt tritt. Beispielsweise könnte andernfalls die Aufhellung der Probe, die innerhalb des Probenvolumens in einem Aufhellungsmedium eingebettet ist, durch das Immersionsmedium verschlechtert werden. Die Kapillarzelle der erfindungsgemäßen Anordnung verhindert diesen negativen Effekt und stellt damit eine langfristige Probenaufhellung und hohe Abbildungsqualität sicher.

Generell lässt sich sagen, dass es die Trennung von Probenvolumen und Kammervolumen überhaupt erst ermöglicht, Immersionsaufnahmen von einer Probe durchzuführen, die sich in einer probenspezifischen sowie einer beliebig und unabhängig vom Immersionmedium einstellbaren Umgebung befindet.

Ein weiterer Vorteil des abgeschlossenen Probenvolumens besteht darin, dass der Aufenthaltsort der Probe auf das Probenvolumen begrenzt wird. Damit wird verhindert, dass die Probe wegdiffundiert und in dem Kammervolumen verloren geht. Dies ist besonders vorteilhaft bei der Untersuchung von lebenden Proben, die sich bei einer Untersuchung mit der Kapillarzelle der erfindungsgemäßen Anordnung nicht aus dem Probenvolumen herausbewegen können.

Die Kapillarzelle der erfindungsgemäßen Anordnung wirkt sich zudem positiv auf die Bildqualität aus. Gekrümmte Übergangsflächen zwischen unterschiedlichen Medien im Strahlengang des zu detektierenden Fluoreszenzlichtes oder im Beleuchtungsstrahlengang führen zu optischen Verzerrungen. Diese optischen Verzerrungen beeinträchtigen die Aufnahmequalität. Dadurch, dass bei der Kapillarzelle der erfindungsgemäßen Anordnung die Wand des Kapillarabschnitts zumindest abschnittsweise eben und transparent ist, kann das Fluoreszenzlicht der Probe die Kapillarzelle verzerrungsfrei verlassen. Somit können mit der Kapillarzelle der erfindungsgemäßen Anordnung hochaufgelöste und realitätsgetreue Probenbilder mit einem Minimum an Aberrationen aufgenommen werden.

Die zumindest abschnittsweise ebene und transparente Wand ist auch vorteilhaft für eine lokale Fluoreszenzanregung einer zu beleuchtenden Lichtebene. Aufgrund der ebenen und transparenten Wand wird der Beleuchtungsstrahl nicht verzerrt und die lokale Anregung kann erheblich präziser erfolgen als dies bei einer Beleuchtung durch gekrümmte Flächen möglich wäre.

Die Kapillarzelle der erfindungsgemäßen Anordnung eignet sich insbesondere für die Probenuntersuchung mit einem Lichtmikroskop, dessen Illuminations- und Detektionsachse rechtwinklig zueinander stehen, und/oder mit einem Lichtscheiben-, einem Epi- oder einem Konfokal-Fluoreszenzmikroskop.

Vorzugsweise ist die genannte Verbindung zwischen dem oberen und/oder dem unteren Verschlussabschnitt und dem Kapillarabschnitt lösbar. In diesem Fall weist der Kapillarabschnitt eine obere und/oder eine untere Öffnung auf, die durch den oberen bzw. den unteren Verschlussabschnitt verschlossen werden kann. Um die Probe in das Probenvolumen einzubringen, kann die Probe zunächst auf dem unteren Verschlussabschnitt abgelegt werden, beispielsweise mithilfe einer Pipette oder eines Mikromanipulators. Anschließend kann der Kapillarabschnitt mit dem unteren Verschlussabschnitt verbunden werden und damit die Probe in das in das Probenvolumen eingebracht werden. Eine andere Möglichkeit besteht darin, die Probe durch die obere Öffnung des Kapillarabschnitts in das Probenvolumen einzubringen.

In einer vorteilhaften Weiterbildung umfasst die Kapillarzelle einen Einlass und einen Auslass. Durch den Einlass kann beispielsweise die zu untersuchende Probe in das Probenvolumen eingebracht werden. Weiterhin können durch den Einlass dem Probenvolumen auch Medien zur Probenbehandlung zugeführt werden. Entsprechend kann durch den Auslass ein derartiges Medium aus dem Probenvolumen abgeführt werden. Die Zu- und Abfuhr des Mediums durch den Einlass bzw. den Auslass können auch gleichzeitig erfolgen, sodass innerhalb des Probenvolumens ein Fluss erzeugt wird. Der Fluss kann - wie unten beschrieben - zur Probenzentrierung eingesetzt werden.

Mithilfe des Einlasses und des Auslasses können die Umgebungsbedingungen der Probe präzise und wunschgemäß eingestellt oder verändert werden. Diese Einstellung bzw. Veränderung der Probenumgebung kann auch während der Untersuchung durchgeführt werden, ohne dass die Probe dazu entnommen werden muss. Vorzugsweise sind Einlass und Auslass in unterschiedlichen Verschlussabschnitten angeordnet, z. B. der Einlass im oberen und der Auslass im unteren Verschlussabschnitt oder umgekehrt. Dadurch kann der Fluss in Längsrichtung des Kapillarabschnittes erzeugt werden.

Vorzugsweise umfasst die Kapillarzelle einen ersten und einen zweiten ebenen Wandabschnitt. Diese beiden Wandabschnitte weisen in unterschiedliche Richtungen, sodass sowohl die Beleuchtung der Probe als auch die Detektion des Fluoreszenzlichtes verzerrungsfrei in den entsprechenden Richtungen erfolgen kann. Dabei tritt durch den ersten ebenen Wandabschnitt von der Probe ausgehendes Fluoreszenzlicht aus der Kapillarzelle aus und Anregungslicht durch den zweiten ebenen Wandabschnitt in die Kapillarzelle ein.

In einer bevorzugten Ausführungsform weist der Kapillarabschnitt der Kapillarzelle einen polygonalen, insbesondere einen quadratischen oder einen oktogonalen Querschnitt auf. Diese Querschnittsformen sind besonders vorteilhaft. Einerseits kann das von der Probe ausgehende Fluoreszenzlicht den Kapillarabschnitt in unterschiedlichen Richtungen durch ebene Wandabschnitte verlassen. Dadurch kann - bei einer entsprechenden Drehung der Kapillarzelle - die Probe in verschiedenen Perspektiven mit hoher Qualität abgebildet werden. Andererseits kann die Probe auch in den verschiedenen, oben genannten Perspektiven durch ebene Wandabschnitte präzise und lokal beleuchtet werden. Dabei kann die Probe insbesondere aus Richtungen beleuchtet werden, die von der Detektionsrichtung abweichen.

Beispielsweise können bei einem regelmäßigen oktogonalen Querschnitt die Beleuchtung und die Detektion im rechten Winkel zueinander und durch ebene Wandabschnitte erfolgen. Bei einer Drehung des Kapillarabschnitts mit oktogonalem Querschnitt mitsamt der Probe können für acht unterschiedliche Probenperspektiven hochaufgelöste Bilder durch die entsprechenden ebenen Wandabschnitte beobachtet werden. Für jede der acht Probenperspektiven wird die Probe insbesondere durch einen entsprechenden ebenen Wandabschnitt beleuchtet. Dabei muss weder die Richtung der Detektion noch die der Beleuchtung geändert werden.

Vorzugsweise ist die Probe auf ein kleines Probenvolumen, insbesondere auf einen kleinen lateralen Bereich eingeschränkt, sodass die innere Querschnittsfläche des Kapillarabschnitts vorzugsweise ≤ 10 mm² und besonders vorzugsweise ≤ 7 mm² ist.

Die Querschnittsfläche sollte allerdings nicht beliebig klein sein, damit auch entsprechend größere Proben untersucht werden können. Außerdem sollte ausreichend Probenvolumen zur Verfügung stehen, um eine definierte Probenumgebung bereitstellen und aufrechterhalten zu können. Daher ist die innere Querschnittsfläche des Kapillarabschnitts vorzugsweise ≥ 0,1 mm² und besonders vorzugsweise ≥ 0,2 mm².

Es hat sich gezeigt, dass diese Bereiche einen optimalen Kompromiss zwischen einer möglichst starken Probeneingrenzung, einem ausreichend großen Probenvolumen, einer einfachen Handhabung sowie einer guten Herstellbarkeit darstellen.

Die Wandstärke des Kapillarabschnitts ist vorzugsweise ≤ 200 µm und besonders vorzugsweise ≤ 100 µm und/oder vorzugsweise ≥ 30 µm und besonders vorzugsweise ≥ 50 µm. Die Erfinder haben erkannt, dass diese Bereiche einen idealen Kompromiss zwischen Herstellbarkeit und Stabilität der Kapillarzelle sowie geringer optischer Aberration bieten.

Um die Kapillarzelle einfacher für die Untersuchung ausrichten zu können, weist der Kapillarabschnitt vorzugsweise eine regelmäßige polygonale Querschnittsfläche auf. Dabei weichen die Winkel zwischen benachbarten Seitenflächen des Kapillarabschnitts vorzugsweise nur wenig voneinander ab. Vorzugsweise weichen die Winkel von ihrem Mittelwert weniger als ± 0,5°, besonders vorzugsweise weniger als ± 0,2° ab.

In einer vorteilhaften Weiterbildung besteht die Wand des Kapillarabschnitts zumindest abschnittsweise aus einer gasdurchlässigen Membran. Dadurch kann die Konzentration eines gelösten Gases (z. B. Sauerstoff oder CO₂) und/oder der pH-Wert innerhalb des Probenvolumens entsprechend der Gaskonzentration außerhalb der Kapillarzelle eingestellt oder verändert werden. So kann auf einfache Art und Weise eine definierte Probenumgebung geschaffen oder die Probenumgebung definiert verändert werden. Zudem werden die Überwachung und die Beobachtung der Gaskonzentration erheblich vereinfacht. Beispielsweise kann die Sauerstoff- oder die CO₂-Konzentration innerhalb der Kapillarzelle durch Messung außerhalb der Kapillarzelle bestimmt werden.

Die Wand der Kapillarzelle besteht vorzugsweise zumindest abschnittsweise aus qualitativ hochwertigem optischem Glas. Das optische Glas besitzt vorzugsweise eine hohe Gleichmäßigkeit des Brechungsindex. Geeignet ist beispielsweise die Glassorte Schott N-F45 mit einem Brechungsindex n von n > 1,46 und/oder von n < 1,52. Dadurch kann die Bildqualität zusätzlich erhöht werden, da Streueffekte und Verzerrungseffekte weiter reduziert werden.

In einer vorteilhaften Weiterbildung der Kapillarzelle ist die Oberfläche der Wand zumindest abschnittsweise behandelt. Die Behandlung kann beispielsweise darin bestehen, dass die Oberfläche mit einer Verspiegelung und/oder mit einer Sperrfilterschicht und/oder mit einer Antireflexbeschichtung versehen wird. Die Beschichtung kann dabei in einem Bedampfungsverfahren, einem Sol-Gel-Verfahren oder einem Galvanisierungsverfahren durchgeführt werden. Durch die Antireflexbeschichtung können störende Reflektionen, beispielsweise von Fluoreszenzlicht der Probe, an den Wandbereichen der Kapillarzelle verringert und die Erzeugung von Spiegelbildern der Probe vermindert werden. Durch die Sperrfilterschicht können bestimmte Wellenlängenbereiche des Fluoreszenzlichts ausgeblendet werden oder die Anregung der Probe für bestimmte Wellenlängenbereiche nicht angeregt werden. Dadurch kann z. B. eine Probe, bei der verschiedene Strukturen mit verschiedenen Fluoreszenzfarbstoffen präpariert sind, selektiv bezüglich einer bestimmten Struktur untersucht werden. Darüber hinaus, wird durch die Sperrfilterschicht die Detektion von Streulicht minimiert. Durch die Verspiegelung eines Wandabschnitts der Kapillarzelle kann die Justierung des Beleuchtungslaserstrahls vereinfacht werden und der Beleuchtungsstrahl senkrecht oder annähernd senkrecht zu einem Wandabschnitt der Kapillarzelle ausgerichtet werden.

Weiterhin ist es vorteilhaft, wenn die Wand der Kapillarzelle eine Markierung aufweist, um die Kapillarzelle einfacher innerhalb des Kammervolumens positionieren zu können. Mithilfe der Markierung kann die Kapillarzelle schnell und einfach an eine vorbestimmte Referenzposition verschoben werden. Die Referenzposition kann dabei beispielsweise optisch - etwa mit einem Positionierungslaser - angezeigt werden.

Zur Zentrierung und Fixierung der Probe innerhalb der Kapillarzelle umfasst die Kapillarzelle erfindungsgemäß einen Probenzentrierer. Der Probenzentrierer ist vorzugsweise im Bereich des unteren Verschlussabschnitts angeordnet. Der Probenzentrierer besitzt vorzugsweise eine Selbstzentrierungsfunktion, durch welche die Probe beim Absinken innerhalb der Kapillarzelle zentriert wird. Die Probe wird dabei durch den Probenzentrierer aufgrund der Schwerkraft passiv zentriert. Ein aktives Zentrieren ist nicht erforderlich. Dies entspricht dem Prinzip der kinematischen Lagerung.

Um die kinematische Lagerung der Probe zu verbessern, wird zum Beispiel - wie oben beschrieben - innerhalb der Kapillarzelle ein gerichteter Fluss bzw. eine Strömung erzeugt, durch den eine Kraft auf die Probe ausübt wird. Durch diese Kraft wird die Probe mithilfe des Probenzentrierers an einem Beobachtungsort festgehalten. Die kinematische Lagerung ist besonders vorteilhaft für die Untersuchung von lebenden Proben, die sich ohne die kinematische Lagerung frei in dem Probenvolumen bewegen können.

Der Probenzentrierer enthält vorzugsweise ein Führungsmittel, mit mindestens einer Führungsfläche und/oder Führungskante. Die Führungsfläche und/oder Führungskante ist zur Längsachse des Kapillarabschnitts geneigt und läuft radial auf einen Beobachtungsort zu. Dadurch wird eine Probe, die sich in Längsrichtung des Kapillarabschnitts auf den Beobachtungsort zubewegt - etwa aufgrund der Schwerkraft oder einer Strömung - durch die Führungsfläche bzw. die Führungskante in radialer Richtung zum Beobachtungsort geführt. Die Führungsfläche und/oder Führungskante wirkt wie eine schiefe Ebene, die eine Probenbewegung in Längsrichtung des Kapillarabschnitts zumindest teilweise in eine radiale Bewegung umlenkt. Die radiale Bewegungsrichtung ist senkrecht zur Längsrichtung und zur Wand des Kapillarabschnitts. Am Beobachtungsort wird eine weitere Bewegung Probe in Längsrichtung geometrisch verhindert, sodass die Probe am Beobachtungsort aufgrund der auf sie einwirkenden Kräfte zentriert bleibt.

In einer vorteilhaften Weiterbildung weist das Führungsmittel mindestens eine erste Aussparung auf, die derart angeordnet ist, dass vom Beobachtungsort ausgehendes Licht die erste Aussparung durchlaufen und durch den zugehörigen genannten ersten ebenen Wandabschnitt aus dem Kapillarabschnitt austreten kann. Durch die erste Aussparung wird sichergestellt, dass das von der Probe ausgehende Fluoreszenzlicht zumindest teilweise verzerrungsfrei aufgenommen werden kann - und nicht vollständig durch die Führungsmittel geblockt oder nicht-ebene Wandabschnitte verzerrt wird.

Vorzugsweise weist das Führungsmittel auch mindestens eine zweite Aussparung auf. Die zweite Aussparung ist derart angeordnet, dass Licht, das den Beobachtungsort durch den genannten zweiten ebenen Wandabschnitt beleuchtet, die zweite Aussparung durchlaufen kann. Dadurch wird sichergestellt, dass die Probe trotz Zentrierung im Probenzentrierer ausreichend und verzerrungsfrei beleuchtet werden kann.

Vorzugsweise ist die Kapillarzelle mit dem Verschiebetisch verbindbar mithilfe einer Magnetverbindung. Einerseits kann die Kapillarzelle aufgrund der Magnetverbindung schnell und ausreichend fest auf dem Verschiebetisch befestigt werden. Andererseits ist die Verbindung schnell und einfach lösbar, sodass die Kapillarzelle auch ohne aufwendige Umbaumaßnahmen entfernt werden kann, beispielsweise für den Austausch der Probe oder für eine Veränderung der Probenumbebung. Mithilfe des Verschiebetisches kann die Kapillarzelle innerhalb der Kammer positioniert werden, insbesondere um ihre Längsachse gedreht und/oder in XYZ-Richtung verschoben werden.

Zusätzlich umfasst die Erfindung eine Anordnung zur Positionierung und zur Untersuchung einer mikroskopischen Probe, insbesondere einer aufgehellten, fluoreszierenden Probe mithilfe eines Lichtscheiben-Fluoreszenz-Mikroskopes. Diese Anordnung umfasst die zuvor genannte Anordnung zur Positionierung und zusätzlich eine Kammer. Die Kammer umfasst eine zumindest abschnittsweise transparente Kammerwand, die das genannte Kammervolumen definiert. Der Verschiebetisch ist zusammen mit der Kapillarzelle zumindest teilweise innerhalb des Kammervolumens angeordnet, sodass eine Probe für eine Untersuchung innerhalb des Kammervolumens positioniert werden kann.

Das Kammervolumen kann beispielsweise mit einer Immersionsflüssigkeit - etwa mit Wasser - gefüllt werden. Da die Kammerwand zumindest abschnittsweise transparent ist, kann von der Probe ausgehendes Fluoreszenzlicht die Kammer verlassen und außerhalb der Kammer aufgenommen werden. Mithilfe des Verschiebetisches kann die Kapillarzelle - und damit die Probe - innerhalb der Kammer positioniert werden. Die Positionierung kann in einer Drehung und/oder in einer Verschiebung in eine beliebige Raumrichtung bestehen. Da die Kapillarzelle verschlossen ist, ist das Kammervolumen von dem Probenvolumen getrennt. Durch die Trennung wird eine Beeinträchtigung der Probe durch das Immersionsmedium ausgeschlossen. Außerdem wird ausgeschlossen, dass das Immersionsmedium durch das Probenmedium verunreinigt oder vergiftet wird.

Vorzugsweise umfasst die Kammerwand ein erstes Fenster und ein zweites Fenster. Durch das erste Fenster kann die Probe, die sich innerhalb der Kapillarzelle befindet, beleuchtet und zur Fluoreszenz angeregt werden. Das von der Probe ausgehende Fluoreszenzlicht kann die Kammer durch das zweite Fenster verlassen und außerhalb der Kammer aufgenommen werden. Die Fester sind dem Beobachtungsort vorzugsweise aus verschiedenen Richtungen zugewandt sind. Dadurch wird sichergestellt, dass das detektierte Fluoreszenzlicht nicht von dem wesentlich intensiveren Beleuchtungslicht überlagert wird. Dies hat den Vorteil, dass kein zusätzlicher Filter benötigt wird, um das zu detektierende Fluoreszenzlicht von dem Beleuchtungslicht zu befreien.

Die vorliegende Erfindung umfasst weiterhin ein Verfahren zum Einbringen einer mikroskopischen Probe in eine Kapillarzelle einer Anordnung nach einer der oben beschriebenen Ausführungsformen.

Dazu wird die Probe zunächst, beispielsweise mit einer Pipette oder mit einem Mikromanipulator, auf dem unteren Verschlussabschnitt, abgelegt. Anschließend wird der untere Verschlussabschnitt mit dem Kapillarabschnitt verbunden. Dabei wird die Probe durch die untere Öffnung des Kapillarabschnitts in das Probenvolumen eingebracht und die Kapillarzelle verschlossen. Wenn sich der Probenzentrierer auf dem unteren Verschlussabschnitt befindet, kann die Probe bei diesem Verfahrensschritt auch direkt auf dem Probenzentrierer abgelegt werden, bevor die Kapillarzelle mit dem unteren Verschlussabschnitt verschlossen wird.

Alternativ kann die Probe auch durch die obere Öffnung des Kapillarabschnitts in die Kapillarzelle eingebracht werden. Dazu wird der obere Verschlussabschnitt der geschlossenen Kapillarzelle entfernt und die Probe - ggf. zusammen mit einem Probenmedium - in das Probenvolumen eingebracht bzw. eingefüllt. Anschließend wird der Kapillarabschnitt wieder mit dem oberen Verschlussabschnitt verbunden und die Kapillarzelle geschlossen.

Eine weitere Alternative besteht darin, die Probe durch den Einlass in das Probenvolumen einzubringen. Diese Alternative kann auch mit Kapillarzellen von erfindungsgemäßen Anordnungen verwendet werden, bei denen die Verbindung zwischen dem Kapillarabschnitt und den Verschlussabschnitten nicht lösbar ist und bei denen die Verschlussabschnitte permanent mit dem Kapillarabschnitt verbunden sind.

Vorzugweise wird in dem erfindungsgemäßen Verfahren die Probe nach dem Einbringen in das Probenvolumen - und vor der Untersuchung - innerhalb der Kapillarzelle zentriert. Die Zentrierung erfolgt dadurch, dass die Probe aufgrund einer Strömung bzw. eines Flusses des Probenmediums oder aufgrund der Schwerkraft in Längsrichtung des Kapillarabschnitts auf dem Beobachtungsort zubewegt wird, wobei die Probe mithilfe des Führungsmittels des Probenzentrierers in radialer Richtung zum Beobachtungsort geführt wird. Die Strömung kann dabei wie zuvor beschrieben erzeugt werden.

In einer vorteilhaften Weiterbildung umfasst das erfindungsgemäße Verfahren weiterhin ein Einleiten eines Mediums zur Probenbehandlung. Das Einleiten des Mediums zur Probenbehandlung erfolgt dabei durch den Einlass. Dabei kann das Einleiten vor oder während der Untersuchung der Probe erfolgen. Wenn das Einleiten während der Untersuchung erfolgt, kann beispielsweise untersucht werden, welche Auswirkung eine Veränderung der Probenumgebung auf die Probe hat.

Weiterhin umfasst die Erfindung ein Verfahren zur Untersuchung einer aufgehellten mikroskopischen Fluoreszenzprobe mit der zuvor beschriebenen Anordnung mithilfe eines Lichtscheiben-Fluoreszenz-Mikroskopes. Das Verfahren umfasst die Schritte des Positionierens der Fluoreszenzprobe, des Beleuchtens der Fluoreszenzprobe und des Detektierens von Fluoreszenzlicht.

Das Positionieren der Fluoreszenzprobe erfolgt dabei mithilfe des Verschiebetisches, der die Kapillarzelle um ihre Längsachse dreht und/oder in XYZ-Richtung verschiebt. Die Fluoreszenzprobe wird durch das erste Fenster beleuchtet, sodass die Fluoreszenzprobe zur Fluoreszenz angeregt wird. Das der Probe entstammende Fluoreszenzlicht wird außerhalb der Kammer hinter dem zweiten Fenster detektiert. Beleuchtungs- und Detektionsrichtung weichen voneinander ab, sodass das detektierte Fluoreszenzlicht nicht von intensiverem Beleuchtungslicht überlagert wird. Die Beleuchtungs- und Detektionslinse können mit Linsenschiebern mit hoher Genauigkeit entlang der entsprechenden optischen Achsen positioniert werden. Dadurch kann die Verschiebung der Fokalebene, welche durch eine Änderung der räumlichen Brechungsindexverteilung in der Kammer verursacht wird, kompensiert werden.

Die vorliegende Erfindung umfasst weiterhin ein Verfahren, das aus einer beliebigen Kombination der vorgenannten Verfahren besteht, im Rahmen des Schutzumfangs der Patentansprüche.

### KURZBESCHREIBUNG DER FIGUREN

Weitere Vorteile und Merkmale der Erfindung ergeben sich aus der folgenden Beschreibung, in der die Erfindung anhand von bevorzugten Ausführungsbeispielen unter Bezugnahme auf die beigefügten Zeichnungen näher erläutert wird. Darin zeigen:
- Fig. 1a), b): eine schematische Perspektivansicht von zwei unterschiedlichen Ausführungsformen der erfindungsgemäßen Kapillarzelle,
- Fig. 2a)-c): schematische Perspektivansichten von drei unterschiedlichen Ausführungsformen eines Probenzentrierers,
- Fig. 3: eine schematische Perspektivansicht einer erfindungsgemäßen Anordnung zur Aufnahme, Positionierung und Untersuchung einer Probe,
- Fig. 4: negative Probenebenenaufnahmen einer fluoreszenzmarkierten Brusttumor-Zellanhäufung, die mit einer erfindungsgemäßen Anordnung aufgenommen wurden,
- Fig. 5: negative Probenebenenaufnahmen einer Zellanhäufung mit fluoreszenzmarkierten Zellkernen, die mit einer erfindungsgemäßen Anordnung aufgenommen wurden,
- Fig. 6: negative Probenebenenaufnahmen der Zellanhäufung aus Fig. 5, wobei die Zellanhäufung für die Untersuchung aufgehellt wurde.

### BESCHREIBUNG BEVORZUGTER AUSFÜHRUNGSFORMEN

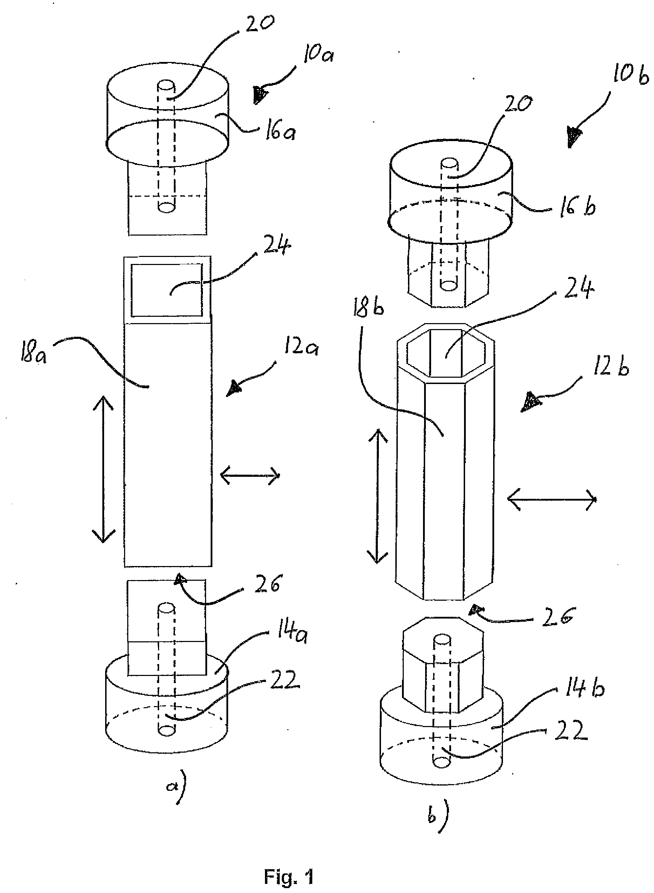

Fig. 1 a) und b) zeigen eine schematische perspektivische Ansicht von zwei Ausführungsformen der erfindungsgemäßen Kapillarzelle 10a, 10b. Die Kapillarzelle 10a, 10b umfasst einen Kapillarabschnitt 12a, 12b, einen unteren Verschlussabschnitt 14a, 14b und einen oberen Verschlussabschnitt 16a, 16b. Der Kapillarabschnitt 12a, 12b umfasst eine Wand 18a, 18b, die ein Probenvolumen umschließt. Der obere Verschlussabschnitt 16a, 16b umfasst einen Einlass 20 und der untere Verschlussabschnitt 14a, 14b umfasst einen Auslass 22. Der Kapillarabschnitt 12a, 12b hat eine obere Öffnung 24 und eine untere Öffnung 26, die mit dem oberen Verschlussabschnitt 16a, 16b bzw. mit dem unteren Verschlussabschnitt 14a, 14b verschlossen werden können. Die Wand 18a, 18b ist transparent und besteht vorzugweise aus optischem Glas, sodass eine Probe (nicht gezeigt), die sich innerhalb des Kapillarabschnitts 12a, 12b befindet, beleuchtet und zur Fluoreszenz angeregt werden kann. Das von der Probe emittierte Fluoreszenzlicht kann die Kapillarzelle 10a, 10b durch die transparente Wand 18a, 18b verlassen.

Die in Fig. 1a gezeigte Ausführungsform der Kapillarzelle 10a umfasst einen Kapillarabschnitt 12a mit einem quadratischen Querschnitt. Die Wand 12a umfasst somit vier ebene Seitenflächen, durch die eine Probe innerhalb der Kapillarzelle 10a in vier unterschiedlichen Probenansichten betrachtet und untersucht werden kann. Dazu kann entweder bei einer feststehenden Kapillarzelle 10a die Detektionsrichtung entsprechend angepasst werden oder aber die Detektionsrichtung festgehalten und die Kapillarzelle 10a entsprechend gedreht werden. Dabei entsprechen in dem Ausführungsbeispiel von Fig. 1a) die Drehwinkel Vielfachen von 90°. Für die Untersuchung in jeder der vier Probenperspektiven wird das Fluoreszenzlicht detektiert, welches den Kapillarabschnitt 12a im 90°-Winkel zur Beleuchtungsrichtung verlässt. Bei der Untersuchung in jeder der vier Probenperspektiven wird die Probe durch eine ebene Seitenfläche beleuchtet. Das zu detektierende Fluoreszenzlicht durchläuft somit eine benachbarte ebene Seitenfläche des Kapillarabschnitts 12a.

Die in Fig. 1b gezeigte Kapillarzelle 10b enthält einen Kapillarabschnitt 12b mit einem oktagonalen Querschnitt. Dementsprechend besitzt der Kapillarabschnitt 12b acht ebene Seitenflächen. Dadurch kann eine Probe innerhalb des Kapillarabschnitts 12b für acht unterschiedliche Probenperspektiven durch zugehörige ebene Seitenflächen betrachtet werden. Aufgrund des oktagonalen Querschnitts wird bei der Kapillarzelle 10b vorzugsweise Fluoreszenzlicht detektiert, das den Kapillarabschnitt 12b in einem Winkel von 45° oder 90° zur Beleuchtungsrichtung verlässt.

Durch den Einlass 20 kann dem Probenvolumen ein Medium zugefügt werden und durch den Auslass 22 kann ein Medium aus dem Probenvolumen abgeführt werden. Durch gleichzeitiges Zu- und Abführen kann innerhalb des Probenvolumens ein Fluss bzw. eine Strömung in Längsrichtung (in Fig. 1a und in Fig. 1b durch einen vertikalen Doppelpfeil dargestellt) erzeugt werden. Die radiale Richtung ist in Fig. 1a und Fig. 1b durch einen horizontalen Doppelpfeil dargestellt.

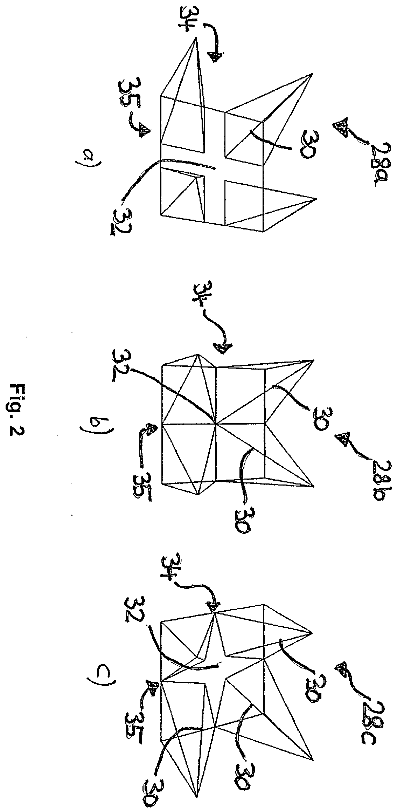

Fig. 2a)-c) zeigen drei Ausführungsformen eines Probenzentrierers 28a,b,c mit dem eine Probe (nicht gezeigt) in der Kapillarzelle 10 zentriert werden kann. Die Probenzentrierer 28a,b,c aus Fig. 2 umfassen Führungsmittel mit jeweils vier Führungskanten 30. Die Probenzentrierer 28a,b,c werden derart in der Kapillarzelle 10 angeordnet, dass die Führungskanten 30 zur Längsachse (vertikale Doppelpfeile in Fig. 1a), b)) des Kapillarabschnitts 12a, b geneigt sind und in radialer Richtung (horizontale Doppelpfeile in Fig. 1) auf einen Beobachtungsort 32 zulaufen. Die Probenzentrierer 28a,b,c enthalten weiterhin vier Aussparungen mit jeweils einer ersten Aussparung 34 und einer zweiten Aussparung 35.

Die erste Aussparung 34 gestattet, dass Fluoreszenzlicht, das von einer Probe am Probenort 32 emittiert wird, die Kapillarzelle 10 verlassen kann, ohne dass dabei das Fluoreszenzlicht von den Führungsmitteln gebrochen, gestreut oder blockiert wird. Die zweite Aussparung 35 gestattet, die Probe am Probenort 32 zu beleuchten, ohne dass die Beleuchtung durch die Führungsmittel beeinträchtigt wird. Dadurch, dass die erste Aussparung 34 und die zweite Aussparung 35 - vom Probenort 32 aus gesehen - in unterschiedliche Richtungen weisen, kann Fluoreszenzlicht detektiert werden, dessen Richtung entsprechend von der Richtung des Beleuchtungslichtes abweicht. Somit ist das detektierte Fluoreszenzlicht nicht von dem Beleuchtungslicht überlagert, wodurch die Detektion erheblich vereinfacht wird.

Die in Fig. 2a)-c) gezeigten Probenzentrierer 28a,b,c mit jeweils vier Aussparungen werden vorzugsweise in der Kapillarzelle 10a mit quadratischem Querschnitt des Kapillarabschnitts 12a verwendet. In der Kapillarzelle 10a können die gezeigten Probenzentrierer 28a,b,c derart angeordnet werden, dass sich - vom Probenort 32 aus gesehen - hinter jeder der vier Aussparungen eine zugehörige ebene Seitenfläche befindet. Beleuchtung und Detektion, die durch ebene Seitenflächen erfolgen, werden somit nicht durch die Führungsmittel beeinträchtigt. Die Begriffe "erste Aussparung" und "zweite Aussparung" beziehen sich in der vorliegenden Beschreibung auf das detektierte Fluoreszenzlicht bzw. die Beleuchtung. Wenn die Kapillarzelle 10a mit einem der Probenzentrierer 28a,b,c bei einer feststehenden Detektion und Beleuchtung verwendet und die Kapillarzelle 10a gedreht wird, dann wechseln die Bezeichnungen "erste" und "zweite" Aussparung zwischen den vier Aussparungen in Abhängigkeit von dem aktuellen Drehwinkel.

Für andere Querschnittsformen des Kapillarabschnitts 12 ist der Probenzentrierer 28 vorzugsweise entsprechend angepasst, sodass jeder ebenen Seitenfläche des Kapillarabschnitts 12 eine entsprechende Aussparung des Probenzentrierers 28 zugeordnet werden kann.

Der Probenzentrierer 28a,b,c kann beispielsweise auf dem unteren Verschlussteil 14 angeordnet sein. Wenn der untere Verschlussteil 14 mit dem Kapillarabschnitt 12 verbunden ist und ein Probenmedium mit einer Probe durch die obere Öffnung 24 des Kapillarabschnitts 12 in das Probenvolumen eingebracht wird, dann sinkt die Probe aufgrund der Schwerkraft in Längsrichtung des Kapillarabschnitts 12 auf den Beobachtungsort 32 zu. Sobald die Probe mit einer der vier Führungskanten 30 in Kontakt tritt, wird die Probe in radialer Richtung dem Beobachtungsort 32 zugeführt. Für die Zentrierung muss die Probe dem Beobachtungsort 32 jedoch nicht notwendigerweise durch die Schwerkraft zugeführt werden. Die Probe kann auch durch einen Fluss in Längsrichtung des Kapillarabschnittes auf den Beobachtungsort 32 zubewegt werden, sodass die Probe am Beobachtungsort 32 zentriert und fixiert wird. Diese Art der Zentrierung bzw. Fixierung wird in der vorliegenden Offenbarung als "kinematische Lagerung" bezeichnet.

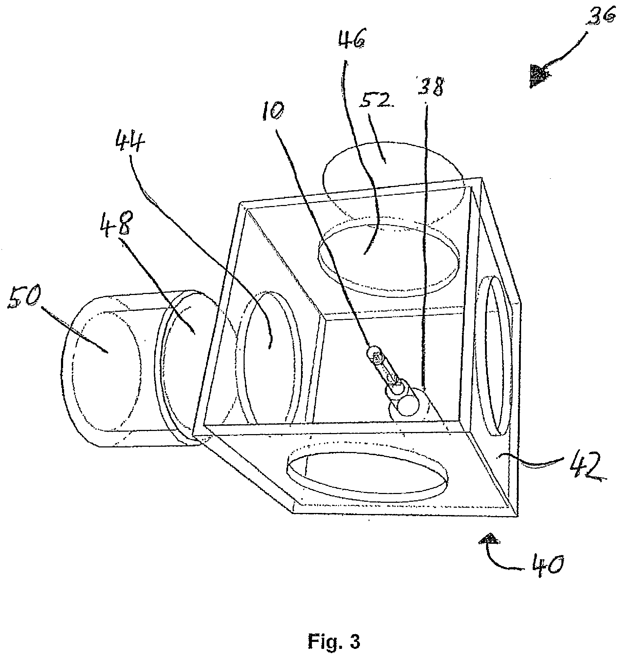

Fig. 3 zeigt eine Anordnung 36 zur Aufnahme, zur Positionierung und zur Untersuchung einer aufgehellten mikroskopischen Probe. Die Anordnung 36 umfasst eine erfindungsgemäße Kapillarzelle 10, einen Verschiebetisch 38 und eine Kammer 40. Die Kammer 40 umfasst eine Kammerwand 42, die ein Kammervolumen definiert. Die Kapillarzelle 10 ist mit dem Verschiebetisch 38 verbunden und innerhalb des Kammervolumens angeordnet. Die Kammerwand 42 umfasst weiterhin ein erstes Fenster 44 und ein zweites Fenster 46. Das erste und das zweite Fenster 44, 46 sind der Kapillarzelle 10 und dem Beobachtungsort 32 jeweils aus unterschiedlichen Richtungen zugewandt. Weiterhin sind in Fig. 3 eine Beleuchtungslinse 48, ein Linsenschieber 50 und eine Detektionslinse 52 gezeigt.

Durch das erste Fenster 44 kann die Probe, die sich in der Kapillarzelle 10 befindet, beleuchtet und zur Fluoreszenz angeregt werden. Von der Probe emittiertes Fluoreszenzlicht kann die Kammer 40 durch das zweite Fenster 46 verlassen und mithilfe der Detektionslinse 52 detektiert werden. Um die Probe für unterschiedliche Probenansichten zu untersuchen, wird die Kapillarzelle 10 mithilfe des Verschiebetisches 38 um ihre Längsachse gedreht. Detektions- und Beleuchtungsrichtung bleiben dabei vorzugsweise im Wesentlichen ortsfest. Da die Wand 18 der Kapillarzelle 10 ebene, transparente Seitenflächen aufweist, kann die Kapillarzelle 10 derart ausgerichtet werden, dass dem ersten und zweiten Fenster 44, 46 jeweils eine ebene, transparente Seitenfläche zugewandt ist. Dadurch kann einerseits Fluoreszenzlicht aufgenommen werden, das ausschließlich ebene Flächen durchlaufen hat. Andererseits kann die Probe, da sie ausschließlich durch ebene Flächen beleuchtet wird, scharf abgegrenzt von anderen fluoreszenzmarkierten Probenbereichen lokal beleuchtet werden. Somit können verzerrungsfreie Bilder von Probenstrukturen mit hoher Auflösung aufgenommen werden.

In der Anordnung 36 aus Fig. 3 sind die Beleuchtung und die Detektion um 90° zueinander versetzt, sodass das detektierte Fluoreszenzlicht nicht von intensiverem Beleuchtungslicht überlagert ist. In das Kammervolumen kann ein Immersionsmedium für Aufnahmen mit einer vergrößerten numerischen Apertur eingebracht werden. Dadurch kann die Auflösung vergrößert werden. Hierzu wird vorzugsweise ein kleiner Abstand zwischen der Kapillarzelle 10 und Detektionslinse 52 gewählt. Dazu kann die Kammerwand 42 auch abschnittsweise in Richtung der Kapillarzelle 10 eingebuchtet sein, sodass die Detektionslinse 52 auch wesentlich dichter an die Kapillarzelle 10 herangebracht werden kann als es in Fig. 3 dargestellt ist.

Um Zellanhäufungen dreidimensional zu untersuchen, können die Zellanhäufungen je nach Größe und Transparenz aufgehellt werden, um eine Streuung des Fluoreszenz- und des Anregungslichtes innerhalb der Probe zu minimieren. Durch ein Verschieben der Kapillarzelle 10 mithilfe des Verschiebetisches 38 entlang der Detektionsrichtung verschiebt sich auch die Beleuchtung innerhalb der Probe. Dadurch werden Fluoreszenzstoffe einer anderen Probenebene selektiv zur Fluoreszenz angeregt. Das aufgenommene Fluoreszenzbild entspricht dann den Strukturen aus einer anderen Ebene der Probe. Indem die Probe durch den Beleuchtungsstrahl geschoben wird und die dabei aufgenommen Bilder zusammengefügt werden, kann eine dreidimensionale Darstellung der Probenstruktur erstellt werden.

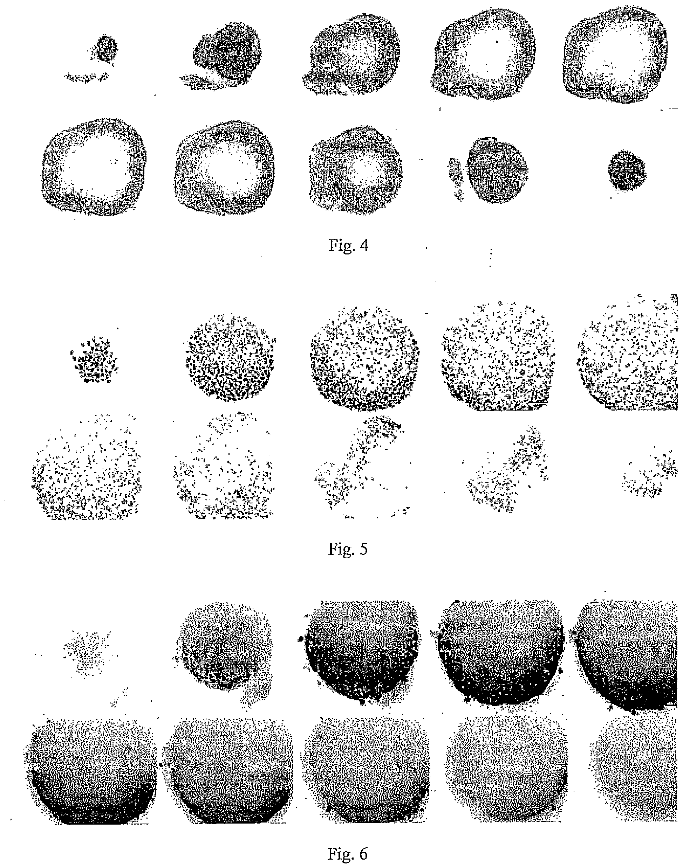

Fig. 4 zeigt Aufnahmen aus unterschiedlichen Probenebenen einer Zellanhäufung, die aus Zellen eines Brusttumors besteht und die etwa 10000 Zellen umfasst. Die Aufnahmen wurden mit der erfindungsgemäßen Anordnung 36 aufgenommen und invertiert. Durch die Invertierung erscheinen in Fig. 4 - ebenso wie in Fig. 5 und Fig. 6 - die fluoreszierenden Bereiche dunkel und umgekehrt - die ursprünglich hellen Bereiche dunkel. Für die Aufnahmen wurden das Strukturprotein Actin mit dem Fluoreszenzfarbstoff Alexa Fluor® 488 Phalloidin und die Zellkerne mit dem Fluoreszenzfarbstoff DRAQ5™ markiert. Insgesamt sind in Fig. 4 zehn Aufnahmen aus unterschiedlichen Probentiefen gezeigt, wobei der Ebenenabstand zwischen zwei horizontal benachbart dargestellten Aufnahmen etwa 50 µm beträgt. Die Länge der schwarzen horizontalen Skalierungsbalken in Fig. 4 beträgt 50 µm. Es ist zu sehen, dass in der oberen Reihe die ersten drei Aufnahmen von rechts und in der unteren Reihe die ersten drei Aufnahmen von links nicht fluoreszierende Bereiche im Inneren aufweisen. Diese Bereiche sind darauf zurückzuführen, dass die entsprechenden Zellen im Kern der Zellanhäufung aufgrund von Nährstoff- und Gasaustauschmangel abgestorben sind. Übrig sind lediglich Zellfragmente, die keine vergleichbaren fluoreszierenden Zellkernstrukturen enthalten, die mit denen der äußeren Zellen vergleichbar sind.

Fig. 5 und 6 zeigen jeweils zehn Aufnahmen einer Probe aus unterschiedlichen Probentiefen. Bei der untersuchten Probe handelt es sich um eine Zellanhäufung, deren Zellkerne mit dem Fluoreszenzfarbstoff DRAQ5™ markiert wurden. Der Ebenenabstand zwischen zwei horizontal benachbart dargestellten Aufnahmen beträgt etwa 40 µm. Beide Aufnahmesequenzen aus Fig. 5 und Fig. 6 wurden mit der erfindungsgemäßen Anordnung 36 durchgeführt. Im Gegensatz zu der Probe aus Fig. 5 wurde die Probe aus Fig. 6 für die Untersuchung aufgehellt.

Der Vergleich von Fig. 5 und Fig. 6 zeigt deutlich den Vorteil einer Aufhellung der untersuchten Fluoreszenzprobe. In der aufgehellten Probe aus Fig. 6 können die Zellkerne aus tieferen Probenschichten, die sich im Inneren der Probe befinden, deutlich aufgenommen werden. In Fig. 5 dagegen gelangt das Fluoreszenzlicht dieser Zellkerne - sofern sie überhaupt von dem Beleuchtungslicht erreicht werden - aufgrund der Streuung im Probeninneren nicht an die Probenoberfläche. Daher konnten diese Zellkerne in Fig. 5 nicht abgebildet werden.

Für die Untersuchung von aufgehellten Proben, wie in Fig. 6 gezeigt, ist die erfindungsgemäße Kapillarzelle 10 besonders vorteilhaft: Während der Untersuchung kann die Probe innerhalb des Probenvolumens in einer speziellen Aufhellungslösung - beispielsweise einer Mischung aus Benzylalkohol und Benzylbenzoat - zur Anpassung des Brechungsindex eingelegt sein. Außerhalb des Probenvolumens kann das Kammervolumen dagegen mit einer wässrigen Immersionslösung gefüllt sein. Aufgrund der Trennung von Proben- und Kammervolumen können Wasserimmersionsobjektive verwendet werden. Ferner wird die Probe - die zur Aufhellung dehydriert wurde - nicht durch die wässrige Immersionslösung re-hydriert. Somit kann mit der Kapillarzelle 10 eine optimale Probenaufhellung auch für beliebig lang andauernde Längzeituntersuchungen aufrechterhalten werden.

Ein weiterer Vorteil ist, dass für die Aufnahmen mit großer numerischer Apertur Wasser als Immersionsmedium verwendet werden kann. Die Trennung verhindert, dass die gesundheitsschädliche Aufhellungslösung aus dem Probenvolumen in das Kammervolumen gelangt und sich mit der Immersionslösung vermischt. Dadurch kann die aufgehellte Probe nicht nur mit verbesserter Auflösung sondern auch gleichzeitig für den Experimentator gesundheitsunbedenklich untersucht werden, ohne dass die Objektive von dem Aufhellungsmedium angegriffen werden. Da die Aufhellungsmedien die Linsen stark schädigen können, wird im Stand der Technik oft Luft als Immersionsmedium zwischen Probe und Objektivlinse gewählt, wodurch die Lichtsammlung vergleichsweise gering ist. Mit der Kapillarzelle der vorliegenden Erfindung können dagegen Objektive mit besseren Lichtsammeleigenschaften verwendet und die Objekte gleichzeitig vor einer Schädigung geschützt werden.

Es ist zu beachten, dass die Fig. 4 bis 6 lediglich als Beispiel für eine Anwendung der vorliegenden Erfindung dienen, die jedoch keinesfalls auf die im Detail beschriebenen Anwendungen beschränkt sein soll. Beispielsweise ist es auch möglich, mithilfe der erfindungsgemäßen Kapillarzelle 10 lebende Proben zu untersuchen, die innerhalb eines probenspezifischen Kulturmediums untersucht werden.

Die in den Zeichnungen und der vorhergehenden Beschreibung aufgezeigten und detailliert beschrieben bevorzugten Ausführungsbeispiele sind als rein beispielhaft und die Erfindung nicht einschränkend anzusehen. Es wird darauf hingewiesen, dass nur die bevorzugten Ausführungsbeispiele dargestellt und beschrieben sind und sämtliche Veränderungen und Modifizierungen, die derzeit und künftig im Schutzumfang der Erfindung liegen, geschützt werden sollen. Die gezeigten Merkmale können in beliebiger Kombination von Bedeutung sein.

### BEZUGSZEICHENLISTE

- 10a, b: Kapillarzelle
- 12a, b: Kapillarabschnitt
- 14a, b: Unterer Verschlussabschnitt
- 16a, b: Oberer Verschlussabschnitt
- 18a, b: Wand
- 20: Einlass
- 22: Auslass
- 24: Obere Öffnung
- 26: Untere Öffnung
- 28a, b, c: Probenzentrierer
- 30: Führungskante
- 32: Beobachtungsort
- 34: Erste Aussparung
- 35: Zweite Aussparung
- 36: Anordnung zur Aufnahme, zur Positionierung und zur Untersuchung einer mikroskopischen Probe
- 38: Verschiebetisch
- 40: Kammer
- 42: Kammerwand
- 44: Erstes Fenster
- 46: Zweites Fenster
- 48: Beleuchtungslinse
- 50: Linsenschieber
- 52: Detektionslinse

## Patentansprüche

1. Anordnung zur Positionierung einer mikroskopischen Probe, wobei die Anordnung folgendes umfasst:
- einen Verschiebetisch (38) und
- eine Kapillarzelle (10a, 10b) zur Aufnahme einer mikroskopischen Probe, insbesondere zur Untersuchung von aufgehellten, fluoreszierenden Proben mithilfe eines Lichtmikroskopes, wobei die Kapillarzelle (10a, 10b) dazu geeignet ist, in einem Kammervolumen positioniert zu werden, und wobei die Kapillarzelle (10a, 10b) folgendes umfasst:
• einen Kapillarabschnitt (12a, 12b), der eine Wand (18a, 18b) umfasst, die ein Probenvolumen umschließt, wobei die Wand (18a, 18b) zumindest abschnittsweise eben und transparent ist,
• einen oberen und einen unteren Verschlussabschnitt (16a, 16b und 14a, 14b), die mit dem Kapillarabschnitt (12a, 12b) verbunden sind und diesen verschließen, so dass das Probenvolumen von dem Kammervolumen getrennt ist,
• einen Probenzentrierer (28a, 28b, 28c) zur Zentrierung und Fixierung der Probe innerhalb der Kapillarzelle (10a, 10b),
wobei die Kapillarzelle (10a, 10b) mit dem Verschiebetisch (38) verbindbar ist, und wobei der Verschiebetisch (38) geeignet ist, die Kapillarzelle (10a, 10b) zu positionieren.

2. Anordnung nach Anspruch 1, bei der die genannte Verbindung zwischen dem oberen und/oder dem unteren Verschlussabschnitt (16a, 16b und/oder 14a, 14b) und dem Kapillarabschnitt (12a, 12b) lösbar ist, wobei der Kapillarabschnitt (12a, 12b) eine obere und/oder eine untere Öffnung (24 und/oder 26) aufweist, die durch den oberen bzw. den unteren Verschlussabschnitt (16a, 16b bzw. 14a, 14b) verschließbar ist.

3. Anordnung nach einen der vorhergehenden Ansprüche, bei der die Kapillarzelle (10a, 10b) einen Einlass (20) und einen Auslass (22) umfasst,
wobei durch den Einlass (20) eine Probe in das Probenvolumen eingebracht und/oder dem Probenvolumen ein Medium zugeführt werden kann, und
wobei durch den Auslass (22) ein Medium aus dem Probenvolumen abgeführt werden kann,
wobei vorzugsweise der Einlass (20) im unteren Verschlussabschnitt (14a, 14b) und der Auslass (22) im oberen Verschlussabschnitt (16a, 16b) oder der Einlass (20) im oberen Verschlussabschnitt (16a, 16b) und der Auslass (22) im unteren Verschlussabschnitt (14a, 14b) angeordnet ist.

4. Anordnung nach einem der vorhergehenden Ansprüche, bei welcher der Kapillarabschnitt (12a, 12b) zumindest einen ersten und einen zweiten ebenen Wandabschnitt aufweist, wobei von der Probe ausgehendes Fluoreszenzlicht durch den ersten ebenen Wandanschnitt aus der Kapillarzelle (10a, 10b) austreten kann, und wobei die Probe durch den zweiten ebenen Wandabschnitt beleuchtet werden kann, und/oder
bei welcher der Kapillarabschnitt (12a, 12b) einen polygonalen, insbesondere einen quadratischen, oder einen oktogonalen Querschnitt aufweist,
wobei der Kapillarabschnitt (12a, 12b) vorzugsweise eine innere Querschnittsfläche aufweist, die ≥ 0.1 mm², vorzugsweise ≥ 0.2 mm² ist und/oder die ≤ 10 mm², vorzugsweise ≤ 7 mm² ist, und/oder
bei welcher der Kapillarabschnitt (12a, 12b) eine Wandstärke aufweist, die ≥ 30 µm, vorzugsweise ≥ 50 µm und/oder die ≤ 200 µm, vorzugsweise ≤ 100 µm ist,
wobei die Winkel zwischen benachbarten Seitenflächen des Kapillarabschnitts vorzugsweise weniger als ±0.5°, besonders vorzugsweise weniger als ±0.2° von ihrem Mittelwert abweichen.

5. Anordnung nach einem der vorhergehenden Ansprüche, bei der die Wand (18a, 18b) zumindest abschnittsweise aus einer gasdurchlässigen Membran besteht, und/oder
bei der die Wand (18a, 18b) zumindest abschnittsweise aus qualitativ hochwertigem optischem Glas besteht, insbesondere aus einem Glas mit einem Brechungsindex n von n > 1,46 und/oder von n < 1,52.

6. Anordnung nach einem der vorhergehenden Ansprüche, bei der die Oberfläche der Wand (18a, 18b) zumindest abschnittsweise behandelt ist, insbesondere mit einer Verspiegelung und/oder mit einer Sperrfilterschicht und/oder mit einer Antireflexbeschichtung versehen ist, und/oder
bei der die Wand (18a, 18b) eine Markierung zur Positionierung der Kapillarzelle (10a, 10b) innerhalb des Kammervolumens aufweist.

7. Anordnung nach einem der vorhergehenden Ansprüche, wobei der Probenzentrierer (28a, 28b, 28c) im Bereich des unteren Verschlussabschnitts (14a, 14b) angeordnet ist.

8. Anordnung nach einem der vorhergehenden Ansprüche, bei welcher der Probenzentrierer (28a, 28b, 28c) ein Führungsmittel mit mindestens einer Führungsfläche und/oder Führungskante (30) enthält, die derart zur Längsachse des Kapillarabschnitts geneigt ist und derart radial auf einen Beobachtungsort (32) zuläuft, dass eine sich in Längsrichtung des Kapillarabschnitts (12a, 12b) auf den Beobachtungsort (32) zubewegende Probe durch die Führung der Führungsfläche bzw. der Führungskante (30) in radialer Richtung zum Beobachtungsort (32) geführt wird,
wobei das Führungsmittel vorzugsweise mindestens eine erste Aussparung (34) aufweist, die derart angeordnet ist, dass vom Beobachtungsort (32) ausgehendes Licht die erste Aussparung (34) durchlaufen und durch den genannten ersten ebenen Wandabschnitt aus dem Kapillarabschnitt (12a, 12b) austreten kann, und/oder
wobei das Führungsmittel mindestens eine zweite Aussparung (35) aufweist, die derart angeordnet ist, dass Licht, das den Beobachtungsort (32) durch den genannten zweiten ebenen Wandabschnitt beleuchtet, die zweite Aussparung (35) durchlaufen kann.

9. Anordnung nach einem der vorhergehenden Ansprüche, bei der die Kapillarzelle (10a, 10b) mit dem Verschiebetisch (38)mithilfe einer Magnetverbindung verbindbar ist, und
bei welcher der Verschiebetisch (38) geeignet ist, die Kapillarzelle (10a, 10b) um ihre Längsachse zu drehen und/oder in XYZ-Richtung zu verschieben.

10. Anordnung (36) zur Positionierung und zur Untersuchung einer mikroskopischen Probe, insbesondere einer aufgehellten, fluoreszierenden Probe mithilfe eines Lichtscheiben-Fluoreszenz-Mikroskopes, wobei die Anordnung folgendes umfasst:
• eine Kammer (40), die eine zumindest abschnittweise transparente Kammerwand (42) umfasst, wobei die Kammerwand (42) das genannte Kammervolumen definiert,
• eine Anordnung nach einem der Ansprüche 1 bis 9, die zumindest abschnittsweise innerhalb des Kammervolumens angeordnet ist,
wobei der Verschiebetisch (38) geeignet ist, die Kapillarzelle (10a, 10b) zumindest teilweise innerhalb des Kammervolumens zu positionieren, und
wobei die Kammer (40) geeignet ist mit einem Immersionsmedium gefüllt zu werden und die Kapillarzelle (10a, 10b) geeignet ist mit einem Probenmedium gefüllt zu werden,
wobei die Kammerwand (42) vorzugsweise ein erstes Fenster (44) enthält, durch das eine in der Kapillarzelle (10a, 10b) befindliche Probe beleuchtet werden kann, und
die Kammerwand (42) vorzugsweise ein zweites Fenster (46) enthält, durch welches Fluoreszenzlicht, das von einer Probe innerhalb der Kapillarzelle (10a, 10b) emittiert wird, aus der Kammer (40) austreten kann,
wobei die Fenster (44, 46) vorzugsweise derart angeordnet sind, dass sie dem Beobachtungsort (32) nicht aus entgegengesetzten Richtungen zugewandt sind.

11. Verfahren zum Einbringen einer mikroskopischen Probe in eine Kapillarzelle (10a, 10b) einer Anordnung nach einem der Ansprüche 1 bis 8, wobei das Verfahren die folgenden Schritte umfasst:
• Ablegen der Probe auf dem unteren Verschlussabschnitt (14a, 14b) und
• Verbinden des Kapillarabschnitts (12a, 12b) mit dem unteren Verschlussabschnitt (14a, 14b), wobei die Probe durch die untere Öffnung (26) des Kapillarabschnitts (12a, 12b) in das Probenvolumen eingebracht wird, oder
• Entfernen des oberen Verschlussabschnittes (16a, 16b) von dem Kapillarabschnitt (12a, 12b), Einbringen der Probe in das Probenvolumen durch die obere Öffnung (24) des Kapillarabschnitts (12a, 12b) und Verschließen der oberen Öffnung (24) mithilfe des oberen Verschlussabschnittes (16a, 16b), oder
• Einbringen der Probe durch den Einlass (20) in das Probenvolumen, das durch den oberen Verschlussabschnitt (16a, 16b), den unteren Verschlussabschnitt (14a, 14b) und den Kapillarabschnitt (12a, 12b) von dem Kammervolumen getrennt ist.

12. Verfahren nach Anspruch 11, bei dem das Probenvolumen ein Probenmedium enthält und die mikroskopische Probe dadurch zentriert wird, dass die Probe aufgrund eines Flusses des Probenmediums oder aufgrund der Schwerkraft in Längsrichtung des Kapillarabschnitts (12a, 12b) auf den Beobachtungsort (32) zubewegt wird,
wobei die Probe mithilfe des Führungsmittels in radialer Richtung zum Beobachtungsort (32) geführt wird.

13. Verfahren nach einem der Ansprüche 11 oder 12, das weiterhin ein Einleiten eines Mediums zur Probenbehandlung umfasst, wobei das Medium zur Probenbehandlung durch den Einlass (20) in das Probenvolumen eingeleitet wird und das Einleiten vor oder während einer optischen Untersuchung der Probe erfolgt.

14. Verfahren zur Untersuchung einer aufgehellten mikroskopischen Fluoreszenzprobe mit einer Anordnung (36) nach Anspruch 10 mithilfe eines Lichtscheiben-Fluoreszenz-Mikroskopes, wobei das Verfahren die folgenden Schritte umfasst:
• Positionieren der Fluoreszenzprobe mithilfe des Verschiebetisches (38) innerhalb des Kammervolumens, wobei das Positionieren der Probe vorzugsweise über ein Drehen der Kapillarzelle (10a, 10b) um ihre Längsachse und/oder über ein Verschieben der Kapillarzelle (10a, 10b) in XYZ-Richtung vermittelt wird,
• Beleuchten der Fluoreszenzprobe durch das erste Fenster (44), so dass die Fluoreszenzprobe infolge der Beleuchtung zur Fluoreszenz angeregt wird und in Richtung des zweiten Fensters (46) Fluoreszenzlicht emittiert,
• Detektieren von Fluoreszenzlicht, das der Probe entstammt, wobei die Detektionsrichtung von der Beleuchtungsrichtung abweicht, und insbesondere senkrecht zur Beleuchtungsrichtung ist.

15. Verfahren zur Aufnahme und/oder zur Behandlung und/oder zur Untersuchung einer aufgehellten mikroskopischen Fluoreszenzprobe, welches ein Verfahren nach Anspruch 14 mit einem Verfahren nach einem der Ansprüche 11 bis 13 kombiniert.

## Claims

1. An arrangement for positioning a microscopic specimen, wherein the arrangement comprises:
a moving stage (38), and
a capillary cell (10a, 10b) for receiving a microscopic specimen, in particular for examining cleared fluorescent specimens with the help of a light microscope, a wherein the capillary cell (10a, 10b) is suitable for being positioned in a chamber volume, and wherein said capillary cell (10a, 10b) comprises the following:
• a capillary section (12a, 12b), which comprises a wall (18a, 18b) that encloses a specimen volume, wherein the wall (18a, 18b) is planar and transparent in at least some sections,
• an upper and a lower closure section (16a, 16b and 14a, 14b), which are connected to the capillary section (12a, 12b) and seal it so that the specimen volume is separated from the chamber volume,
• a specimen-centering device (28a, 28b, 28c) for centring and fixing the specimen within the capillary cell (10a, 10b),
wherein said capillary cell (10a, 10) is connectable with the moving stage (38), and wherein the moving stage (38) is suitable for positioning the capillary cell (10a, 10b).

2. The arrangement according to Claim 1, wherein the aforementioned connection between the upper and/or lower closure sections (16a, 16b and/or 14a, 14b) and the capillary section (12a, 12b) is releasable, wherein the capillary section (12a, 12b) has an upper opening and/or a lower opening (24 and/or 26), which can be sealed by the upper closure section and/or the lower closure section (16a, 16b and/or 14a, 14b).

3. The arrangement according to any one of the preceding claims, in which the capillary cell (10a, 10b) comprises an inlet (20) and an outlet (22),
wherein a specimen is introduced into the specimen volume through the inlet (20) and/or a medium can be supplied to the specimen volume there through, and
wherein a medium can be removed from the specimen volume through the outlet (22), wherein the inlet (20) is preferably arranged in the lower closure section (14a, 14b) and the outlet (22) is arranged in the upper closure section (16a, 16b) or the inlet (20) is arranged in the upper closure section (16a, 16b) and the outlet (22) is arranged in the lower closure section (14a, 14b).

4. The arrangement according to any one of the preceding claims, wherein the capillary section (12a, 12b) has at least one first and at least one second planar wall section, wherein fluorescent light emanating from the specimen can escape from the capillary cell (10a, 10b) through the first planar wall section, and wherein the specimen can be illuminated through the second planar well section, and/or
wherein the capillary section (12a, 12b) has a polygonal, in particular a quadratic or octagonal cross section,
wherein the capillary section (12a, 12b) has preferably an internal cross-sectional area which is ≥0.1 mm², preferably ≥0.2 mm² and/or ≤10mm², preferably ≤7 mm², and/or wherein the capillary section (12a, 12b) has a wall thickness which is ≥30 µm, preferably ≥50 µm and/or ≤200 µm, preferably ≤100 µm,
wherein the angles between neighboring side surfaces of the capillary section deviate from their mean value preferably by less than ±0.5°, more preferably less than ±0.2°.

5. The arrangement according to any one of the preceding claims, wherein the wall (18a, 18b) consists of a gas-permeable membrane in at least some sections, and/or
wherein the wall (18a, 18b) consists of high-quality optical glass in at least some sections, in particular a glass having a refractive index n of n > 1.46 and/or of n < 1.52.

6. The arrangement according to any one of the preceding claims, wherein the surface of the wall (18a, 18b) is treated in at least some sections, in particular being provided with a mirrorization and/or with a blocking filter layer and/or with an anti-reflective coating, and/or wherein the wall (18a, 18b) has a marking for positioning the capillary cell (10a, 10b) within the chamber volume.

7. The arrangement according to any one of the preceding claims, wherein the specimen-centering device (28a, 28b, 28c) is preferably arranged in the region of the lower closure section (14a, 14b).

8. The arrangement according to one of the preceding claims, wherein the specimen-centering device (28a, 28b, 28c) contains a guide means having at least one guide surface and/or guide edge (30) which is inclined with respect to the longitudinal axis of the capillary section and tapers radially to an observation site (32) such that a specimen moving toward the observation site (32) in the longitudinal direction of the capillary section (12a, 12b) is guided in a radial direction toward the observation site (32) by guidance of the guide surface and/or the guide edge (30),
wherein the guide means has at least one first recess (34), which is arranged so that light emanating from the observation site (32) can pass through the first recess (34) and can emerge from the capillary section (12a, 12b) through the aforementioned first planar wall section, and/or
wherein the guide means has at least one second recess (35), which is arranged so that light illuminating the observation site (32) through the aforementioned second planar wall section can pass through the second recess (35).

9. An arrangement according to one of the preceding claims ,
wherein the capillary cell (10a, 10b) can be connected to the moving stage (38)with the help of a magnetic connection, and
wherein the moving stage (38) is suitable for rotating the capillary cell (10a, 10b)about its longitudinal axis and/or displacing it in the XYZ direction.

10. An arrangement (36) for positioning and examining a microscopic specimen, in particular a cleared fluorescent specimen with the help of a light sheet fluorescence microscope, wherein the arrangement comprises the following:
• a chamber (40) comprising a chamber wall (42) that is transparent in at least some sections, wherein the chamber wall (42) defines the aforementioned chamber volume,
• an arrangement according to one of claims 1 to 9 which is arranged inside the chamber volume in at least some sections,
wherein the moving stage (38) is suitable for positioning the capillary cell (10a, 10b) at least partially inside the chamber volume, and
wherein the chamber (40) is suitable for being filled with an immersion medium, and the capillary cell (10a, 10b) is suitable for being filled with a specimen medium, wherein the chamber wall (42) preferably contains a first window (44) through which a specimen situated in the capillary cell (10a, 10b) can be illuminated, and
the chamber wall (42) preferably contains a second window (46) through which fluorescent light which is emitted by a specimen inside the capillary cell (10a, 10b) can exit from the chamber (40),
wherein the windows (44, 46) are preferably arranged so that they are not facing the observation site (32) from opposite directions.

11. A method for introducing a microscopic specimen into a capillary cell (10a, 10b) of an arrangement according to any one of Claims 1 to 8, wherein the method comprises the following steps:
• depositing the specimen on the lower closure section (14a, 14b) and
• connecting the capillary section (12a, 12b) to the lower closure section (14a, 14b), wherein the specimen is introduced into the specimen volume through the lower opening (26) in the capillary section (12a, 12b), or
• removing the upper closure section (16a, 16b) from the capillary section (12a, 12b), introducing the specimen into the specimen volume through the upper opening (24) into the capillary section (12a, 12b) and sealing the upper opening (24) with the help of the upper closure section (16a, 16b), or
• introducing the specimen through the inlet (20) into the specimen volume which is separated from the chamber volume by the upper closure section (16a, 16b), the lower closure section (14a, 14b) and the capillary section (12a, 12b).

12. The method according to Claim 11, wherein the specimen volume contains a specimen medium and the microscopic specimen is centered due to a movement to the observation site (32) based on a flow of the specimen medium or based on the force of gravity in the longitudinal direction of the capillary section (12a, 12b),
wherein the specimen is guided in a radial direction to the observation site (32) with the help of the guide means.

13. The method according to any one of Claims 11 or 12, which additionally comprises an introduction of a medium for a treatment of the specimen, wherein the medium for the specimen treatment is introduced into the specimen volume through an inlet (20) and the introduction takes place before or during an optical examination of the specimen.

14. A method for examining a cleared microscopic fluorescent specimen using an arrangement (36) according to Claim 10 with the help of a light sheet fluorescence microscope, wherein the method comprises the following steps:
• positioning the fluorescent specimen with the help of the moving stage (38) within the chamber volume, wherein the positioning of the specimen is preferably accomplished by rotation of the capillary cell (10a, 10b) about its longitudinal axis and/or by displacement of the capillary cell (10a, 10b) in the XYZ direction,
• illumination of the fluorescent specimen through the first window (44), so that the fluorescent specimen is excited to fluorescence due to the illumination and emits fluorescent light in the direction of the second window (46),
• detecting fluorescent light originating from the specimen, wherein the detection direction is different from the illumination direction and in particular is perpendicular to the illumination direction.

15. The method for receiving and/or treating and/or examining a cleared microscopic fluorescent specimen which combines a method according to Claim 14 with a method according to any one of Claims 11 to 13.

## Revendications

1. Ensemble destiné au positionnement d'un échantillon microscopique, l'ensemble comprenant les éléments suivants :
- une table coulissante (38) et
- une cellule capillaire (10a, 10b) destinée à la réception d'un échantillon microscopique, en particulier à l'examen d'échantillons fluorescents éclairés à l'aide d'un microscope optique, la cellule capillaire (10a, 10b) étant appropriée pour être positionnée dans un volume de chambre, et la cellule capillaire (10a, 10b) comprenant les éléments suivants :
• un segment de capillaire (12a, 12b) qui comprend une paroi (18a, 18b) qui entoure un volume d'échantillon, la paroi (18a, 18b) étant plane et transparente au moins par tronçons,
• un segment de fermeture supérieur et un segment de fermeture inférieur (16a, 16b et 14a, 14b) qui sont raccordés au segment de capillaire (12a, 12b) et ferment celui-ci de telle sorte que le volume d'échantillon est séparé du volume de chambre,
• un centreur d'échantillon (28a, 28b, 28c) destiné au centrage et à la fixation de l'échantillon à l'intérieur de la cellule capillaire (10a, 10b),
la cellule capillaire (10a, 10b) pouvant être raccordée à la table coulissante (38), et la table coulissante (38) étant appropriée pour positionner la cellule capillaire (10a, 10b).

2. Ensemble selon la revendication 1, dans lequel le raccordement cité entre le segment de fermeture supérieur et/ou le segment de fermeture inférieur (16a, 16b et 14a, 14b) et le segment de capillaire (12a, 12b) peut être détaché, le segment de capillaire (12a, 12b) comportant une ouverture supérieure et/ou une ouverture inférieure (24 et/ou 26) qui peut être fermée par le segment de fermeture supérieur ou respectivement le segment de fermeture inférieur (16a, 16b ou respectivement 14a, 14b).

3. Ensemble selon l'une des revendications précédentes, dans lequel la cellule capillaire (10a, 10b) comprend une entrée (20) et une sortie (22),
un échantillon pouvant être mis en place dans le volume d'échantillon à travers l'entrée (20), et/ou un fluide pouvant être acheminé au volume d'échantillon, et
un fluide pouvant être évacué du volume d'échantillon à travers la sortie (22),
de préférence l'entrée (20) étant disposée dans le segment de fermeture inférieur (14a, 14b), et la sortie (22) étant disposée dans le segment de fermeture supérieur (16a, 16b), ou l'entrée (20) étant disposée dans le segment de fermeture supérieur (16a, 16b), et la sortie (22) étant disposée dans le segment de fermeture inférieur (14a, 14b).

4. Ensemble selon l'une des revendications précédentes, dans lequel le segment de capillaire (12a, 12b) comporte au moins un premier et un deuxième segment de paroi plans, la lumière fluorescente sortant de l'échantillon pouvant quitter la cellule capillaire (10a, 10b) à travers le premier segment de paroi plan, et l'échantillon pouvant être éclairé à travers le deuxième segment de paroi plan, et/ou
dans lequel le segment de capillaire (12a, 12b) comporte une section transversale polygonale, en particulier carrée, ou une section transversale octogonale,
le segment de capillaire (12a, 12b) comportant de préférence une surface de section transversale intérieure qui est ≥ 0,1 mm², de préférence ≥ 0,2 mm² et/ou ≤ 10 mm², de préférence ≤ 7 mm², et/ou
dans lequel le segment de capillaire (12a, 12b) présente une épaisseur de paroi qui est ≥ 30 µm, de préférence ≥ 50 µm et/ou ≤ 200 µm, de préférence ≤ 100 µm,
l'angle entre des surfaces latérales voisines du segment de capillaire s'écartant de sa valeur moyenne de préférence de moins de ± 0,5 °, de façon particulièrement préférée de moins de ± 0,2 °.

5. Ensemble selon l'une des revendications précédentes, dans lequel la paroi (18a, 18b) se compose au moins par tronçons d'une membrane perméable au gaz, et/ou
dans lequel la paroi (18a, 18b) se compose au moins par tronçons d'un verre optique de grande qualité, en particulier d'un verre ayant un indice de réfraction n de n > 1,46 et/ou de n < 1,52.

6. Ensemble selon l'une des revendications précédentes, dans lequel la surface de la paroi (18a, 18b) est traitée au moins par tronçons, en particulier est munie d'un miroitage et/ou d'une couche de filtre de barrage et/ou d'un revêtement antireflet, et/ou
dans lequel la paroi (18a, 18b) comporte un repère pour le positionnement de la cellule capillaire (10a, 10b) à l'intérieur du volume de chambre.

7. Ensemble selon l'une des revendications précédentes, dans lequel le centreur d'échantillon (28a, 28b, 28c) est disposé dans la zone du segment de fermeture inférieur (14a, 14b).

8. Ensemble selon l'une des revendications précédentes, dans lequel le centreur d'échantillon (28a, 28b, 28c) contient un moyen de guidage avec au moins une surface de guidage et/ou arête de guidage (30) qui est inclinée par rapport à l'axe longitudinal du segment de capillaire de telle sorte, et qui se dirige radialement vers un lieu d'observation (32) de telle sorte qu'un échantillon devant être déplacé dans l'axe longitudinal du segment de capillaire (12a, 12b) vers le lieu d'observation (32) est guidé par le guidage de la surface de guidage ou respectivement de l'arête de guidage (30) dans la direction radiale rapport au lieu d'observation (32),
le moyen de guidage comportant de préférence au moins un premier évidement (34) qui est disposé de telle sorte que la lumière quittant le lieu d'observation (32) peut traverser le premier évidement (34) et quitter le segment de capillaire (12a, 12b) à travers le premier segment de paroi plan cité, et/ou
le moyen de guidage comportant au moins un deuxième évidement (35) qui est disposé de telle sorte que la lumière qui éclaire le lieu d'observation (32) à travers le deuxième segment de paroi plan cité peut traverser le deuxième évidement (35).

9. Ensemble selon l'une des revendications précédentes, dans lequel la cellule capillaire (10a, 10b) peut être raccordée à la table coulissante (38) à l'aide d'un raccordement aimanté, et
dans lequel la table coulissante (38) est appropriée pour faire tourner la cellule capillaire (10a, 10b) autour de son axe longitudinal et/ou de la faire coulisser dans la direction XYZ.

10. Ensemble (36) destiné au positionnement et à l'examen d'un échantillon microscopique, en particulier d'un échantillon fluorescent éclairé, à l'aide d'un microscope par fluorescence à feuille de lumière, l'ensemble comprenant les éléments suivants :
• une chambre (40) qui comprend une paroi de chambre (42) transparente au moins par tronçons, la paroi de chambre (42) définissant le volume de chambre cité,
• un ensemble selon l'une des revendications 1 à 9, qui est disposée au moins par tronçons à l'intérieur du volume de chambre,
la table coulissante (38) étant appropriée pour positionner la cellule capillaire (10a, 10b) au moins par tronçons à l'intérieur du volume de chambre, et
la chambre (40) étant appropriée pour être remplie avec un fluide d'immersion et la cellule capillaire (10a, 10b) étant appropriée pour être remplie avec le fluide d'échantillon,
la paroi de chambre (42) contenant de préférence une première fenêtre (44) à travers laquelle un échantillon situé dans la cellule capillaire (10a, 10b) peut être éclairé, et
la paroi de chambre (42) contenant de préférence une deuxième fenêtre (46) à travers laquelle la lumière fluorescente qui est émise par un échantillon à l'intérieur de la cellule capillaire (10a, 10b) peut quitter la chambre (40),
les fenêtres (44, 46) étant de préférence disposées de telle sorte qu'elles ne sont pas tournées vers le lieu d'observation (32) à partir de directions opposées.

11. Procédé de mise en place d'un échantillon microscopique dans une cellule capillaire (10a, 10b) d'un ensemble selon l'une des revendications 1 à 8, le procédé comprenant les étapes suivantes :
• dépose de l'échantillon sur le segment de fermeture inférieur (14a, 14b), et
• raccordement du segment de capillaire (12a, 12b) au segment de fermeture inférieur (14a, 14b), l'échantillon étant mis en place dans le volume d'échantillon à travers l'ouverture inférieure (26) du segment de capillaire (12a, 12b), ou
• enlèvement du segment de fermeture supérieur (16a, 16b) par rapport au segment de capillaire (12a, 12b), mise en place de l'échantillon dans le volume d'échantillon à travers l'ouverture supérieure (24) du segment de capillaire (12a, 12b) et fermeture de l'ouverture supérieure (24) à l'aide du segment de fermeture supérieur (16a, 16b), ou
• mise en place de l'échantillon à travers l'entrée (20) dans le volume d'échantillon qui est séparé du volume de chambre par le segment de fermeture supérieur (16a, 16b), le segment de fermeture inférieur (14a, 14b) et le segment de capillaire (12a, 12b).

12. Procédé selon la revendication 11, dans lequel le volume d'échantillon contient un fluide d'échantillon, et l'échantillon microscopique est centré par le fait que l'échantillon est déplacé vers le lieu d'observation (32) en raison d'un flux du fluide d'échantillon ou en raison de la force de la gravité dans la direction longitudinale du segment de capillaire (12a, 12b),
l'échantillon étant guidé à l'aide du moyen de guidage dans la direction radiale par rapport au lieu d'observation (32).

13. Procédé selon l'une des revendications 11 ou 12, qui comprend en outre une introduction d'un fluide destiné au traitement de l'échantillon, le fluide destiné au traitement de l'échantillon étant introduit dans le volume d'échantillon à travers l'entrée (20), et l'introduction s'effectuant avant ou pendant un examen optique de l'échantillon.

14. Procédé d'examen d'un échantillon fluorescent microscopique éclairé avec un ensemble (36) selon la revendication 10 à l'aide d'un microscope par fluorescence à feuille de lumière, le procédé comprenant les étapes suivantes :
• positionnement de l'échantillon fluorescent à l'aide de la table coulissante (38) à l'intérieur du volume de chambre, le positionnement de l'échantillon étant obtenu de préférence par le biais d'une rotation de la cellule capillaire (10a, 10b) autour de son axe longitudinal et/ou par le biais d'un coulissement de la cellule capillaire (10a, 10b) dans la direction XYZ,
• éclairage de l'échantillon fluorescent à travers la première fenêtre (44) de telle sorte que l'échantillon fluorescent subit une excitation de fluorescence par suite de l'éclairage, et que de la lumière fluorescente est émise en direction de la deuxième fenêtre (46),
• détection de la lumière fluorescente qui provient de l'échantillon, la direction de détection divergeant de la direction d'éclairage et étant en particulier perpendiculaire à la direction d'éclairage.

15. Procédé de réception et/ou de traitement et/ou d'examen d'un échantillon fluorescent microscopique éclairé qui combine un procédé selon la revendication 14 avec un procédé selon l'une des revendications 11 à 13.
